# EUROPEAN PATENT APPLICATION

(11) **EP 4 575 598 A1**
(43) Date of publication of application: **25.06.2025**
(21) Application number: 23217425.0
(22) Date of filing: 18.12.2023
(51) Int. Cl.: G02B 6/42, G02B 6/30

(54) **AN ASSEMBLY FOR INTEGRATING A MICRO-OPTICAL DEVICE**

(71) Applicant: vario-optics ag, 9410 Heiden (CH)
(72) Inventor: Strässle, Marc Valentin, 9442 Berneck (CH); Halter, Markus, 9444 Diepoldsau (CH); Lamprecht, Tobias, 9444 Diepoldsau (CH); Betschon, Felix, 9011 St. Gallen (CH)
(74) Representative: Hepp Wenger Ryffel AG

(57) **Abstract**

The subject matter of the present disclosure is directed to an assembly (100) for integrating a micro-optical device (10), comprising a waveguide (WG) chip and a substrate. The waveguide chip (20) has opposing first and second facets (22a, 22b) and at least one second waveguide (21) disposed therein between the first and second facets (22a, 22b). The second waveguide (21) is arranged between a first cladding (23) and a second cladding (24), wherein the first cladding (23) and the at least one second waveguide (21) have a common flat surface (25). The second cladding (24) may only cover a part of the common flat surface (25) such that the first cladding (23) comprises at least one free surface part (26a) beside the second cladding (24) which is free from the second cladding (23).

The substrate (30) comprises a substrate base (31) and at least one first pedestal (32) being vertically arranged between the substrate base (31) and the at least one waveguide chip. The at least one first pedestal (32) is configured to vertically align the butt-coupling between the second waveguide (21) of the waveguide chip with a first waveguide (11) of a micro-optical device (10). At least one, preferably each, of the at least one free surface part (26a) of the first cladding (23) may contact a respective first pedestal (32).

## Description

The subject matter of the present disclosure is directed to an assembly for integrating a micro-optical device, such as a Photonic Integrated Circuit (PIC), comprising a waveguide (WG) chip and a substrate, and a method for manufacturing an assembly to integrate at least one micro-optical device.

The technique disclosed herein provides micron or sub-micron precision, in particular for coupling a fiber containing element such as a multi-channel fiber array to the PIC of such an assembly or for coupling multiple PICs to each other using a waveguide chip.

Space must be used efficiently when assembling complex optical subassemblies or modules having highly integrated Photonic Integrated Circuits (PICs). Coupling of light into these PICs to/from external fibers presents a particular challenge. Fiber coupling is typically achieved using active alignment, which is expensive, time consuming, and can take up value space in an assembly.

Current solutions to achieve fiber coupling involve either (i) actively aligning the PICs directly to fiber blocks, or (ii) using individual V-groove arrays aligned to the PICs using active alignment techniques or less accurate passive techniques. Active alignment techniques are time consuming and require expensive equipment, whereas passive alignment techniques can result in larger coupling losses, and hence lower performance.

US11543592 B2 discloses an assembly comprising at least one photonic integrated circuit (PIC) chip. The at least one PIC chip has a first surface and has at least one first waveguide for optical signals. The assembly further comprises a substrate and at least one waveguide (WG) chip.

The at least one waveguide (WG) chip has first and second facets and a second surface. The second surface has second bumpers affixable to the first bumpers on the first side of the substrate. The at least one WG chip has at least one second waveguide disposed therein between the first and second facets.

The at least one second waveguide at the second facet is configured to couple the optical signals with the at least one first waveguide of the at least one PIC chip.

The substrate has a first side with first bumpers. The first bumpers are affixable adjacent the first surface of the at least one PIC chip. The first surface of the PIC chip has a plurality of second bumpers affixable to the first bumpers. One or more stands are vertically arranged between the substrate and at least one of the at least one WG chip and the at least one PIC, the one or more stands being configured to horizontally align the butt-coupling between the at least one second waveguide of the at least one WG chip with the at least one first waveguide of the at least one PIC chip. The horizontal position of the second waveguide on the substrate is defined by the respective stands and by the position of the waveguide within the waveguide chip which might be difficult to be spotted.

The subject matter of the present disclosure is directed to an assembly for integrating at least one micro-optical device and a method to overcoming, or at least reducing the effects of the problems set forth above and in particular to allow an easy and precise positioning of a micro-optical device with respect to a waveguide chip.

The object is achieved by the characteristics of the independent claims.

An assembly for integrating at least one micro-optical device, in particular a photonic integrated circuit (PIC) chip, comprises at least one waveguide chip and a substrate for receiving the at least micro-optical device.

Within this context the substrate is a carrier substrate which allows electrical and/or optical connections, such as an optical platform, an Electro-Optical Circuit Board (EOCB) or an Electro-Optical Printed Circuit Board (EOPCB).

The at least one micro-optical device has at least a first face and comprises at least one first waveguide for optical signals.

The at least one waveguide chip has opposing first and second facets and may have opposing third and fourth facets. The at least one waveguide chip has at least one second waveguide disposed therein between the first and second facets.

The first facet is configured to butt-couple to the first face of the at least one micro-optical device, at least one of the at least one second waveguide at the first facet is being configured to butt-couple optical signals with at least one of the at least one first waveguide of the at least one micro-optical device. The number of the first and the second waveguides and the lateral distances between the waveguides may correspond to each other.

Thus, the waveguide chip is made for a functional optical connection with the micro-optical device.

The at least one waveguide chip comprises a first cladding and a second cladding. The at least one second waveguide is arranged between the first cladding and the second cladding. The at least one second waveguide is arranged such that the first cladding and the at least one second waveguide have a common flat surface, preferably disposed in a plane.

A process for forming such a waveguide chip is for example disclosed in European Patent EP 2 219 059 B1.

The second cladding only covers a part of the common flat surface such that the first cladding comprises at least one free surface part beside the second cladding which is free from the second cladding. Alternatively or additionally, the first cladding only covers a part of the second cladding such that the second cladding comprises at least one free surface part beside the first cladding which is free from the first cladding.

Preferably, the waveguide chip either comprises at least two free surface parts of the first cladding or at least two free surface parts of the second cladding.

Preferably, the second waveguide is arranged in a waveguide plane defined by the boundary between the first and the second cladding which coincides with the free surface parts.

The substrate for receiving the at least one micro-optical device is in contact with the at least one waveguide chip.

The substrate comprises a substrate base and at least one, preferably monolithically integrated, first pedestal being vertically arranged between the substrate base and the at least one waveguide chip and preferably in contact with the substrate base and the waveguide chip.

Within this application vertical means a direction perpendicular to the bottom surface of the substrate base. Analogously, a horizontal direction or an x- and an y direction are parallel to the bottom surface of the substrate base.

Within this application a single pedestal may be formed as a pillar or, alternatively, the pedestal may be formed as a frame, for example comprising at least one horizontally arranged bar.

One or a number of pillars and/or frames may be arranged on the substrate base to carry the waveguide chip.

In particular, the top surface of the at least one first pedestal defines a first plane parallel to a bottom surface of the substrate base, preferably the top surfaces of all first pedestals define the first plane.

The one or more first pedestals are configured to vertically align the butt-coupling between the at least one second waveguide of the at least one waveguide chip with the at least one first waveguide of the at least one micro-optical device, in particular by providing a defined vertical position of the second waveguides.

The one or more first pedestals preferably are configured to horizontally align the waveguide chip, such that for example the at least one second waveguide at the first facet and/or at the second facet is parallel to the bottom of the substate base.

At least one, preferably each, of the at least one free surface part of the first cladding or at least one, preferably each, of the at least one free surface part of the second cladding contacts a respective first pedestal.

As the first pedestals contact the free surface, the first plane may coincide with the waveguide plane, which preferably is parallel to the bottom surface of the substrate base. The vertical position of the second wave guide is hence defined by the vertical position of the top surface of the pedestals.

Thus, vertical positioning of the waveguide chip is very easy, because the waveguide chip has only to be put on the first pedestals to bring the first facet and the second waveguide into a defined vertical position.

Pedestals can be formed on or in a substrate with a high precision. Hence, the vertical positioning of the waveguide chip is not only easy but also very precise.

In order to realize highest precision, the pedestals can be monolithically integrated, for example by a lithographic or etching process, or can be produced using additive methods such as imprinting.

The pedestals may have a vertical length of a few micrometres up to 1mm.

The height of the pedestals, or rather the depth of cavities between the pedestals is not crucial. They need to generate enough space to fit the waveguide chip, in particular the second cladding, and preferably the micro-optical device, in particular the interposer, into them without them touching the substrate surface.

The overall precision of aligning a PIC to the waveguide chip is in the range ±0.5µm to ±1µm.

A vertical positioning can be achieved with a precision of ±500nm.

A micro-optical device may be added to the assembly and may be placed on the substrate. This can be done in a conventional way by providing bumpers which have a vertical extension to vertically align the micro-optical device with the waveguide chip, for example by active alignment using an optical loop back.

Preferably, the substrate may comprise at least one second pedestal for receiving at least one micro-optical device, wherein the at least one second pedestal is configured for contacting at least one micro-optical device.

In particular, the top surface of the at least one second pedestal defines a second plane parallel to a bottom surface of the substrate base. Preferably, the top surfaces of all second pedestals define the second plane.

The one or more second pedestals are preferably configured to vertically align the butt-coupling between the at least one second waveguide of the at least one waveguide chip with the at least one first waveguide of the at least one micro-optical device, in particular by providing a defined vertical position of the first waveguides.

The one or more second pedestals are preferably configured to horizontally align the micro-optical device, such that for example the first waveguide is parallel to the bottom of the substrate at least at the first face.

Preferably, the second plane is arranged in a vertical position such that the micro-optical device can be simply put on the second pedestals and the first waveguide has the appropriate vertical position to vertical align with the second waveguide.

An assembly may be provided with second pedestals of different kind, in particular of different vertical lengths and/or different horizontal extensions, to allow placement of micro-optical devices of respective different kinds on the assembly.

Different assemblies with respective different second pedestals may be provided to allow placement of micro-optical devices of respective different kinds on a respective assembly.

The height difference of the different kinds of pedestals, in particular the height difference between the first and the second plane, may have a precision of less than 20%, preferably less than 5%. For example, a height difference of 250nm can be etched with a precision of less than ±50nm, preferably less than ±12nm.

Once the waveguide chip and/or the micro-optical device is put on a respective pedestal, the waveguide chip and/or the micro-optical device may have to be laterally moved in order to achieve an appropriate position in in x-y- direction. The movement may take place under visual control.

Preferably the at least one first and/or second pedestal has an extension in x- and/or in y-direction, preferably of at least 5-500pm, which allows a lateral shifting of the waveguide chip and/or the micro-optical device.

The substrate may comprise at least one shoulder for x-y alignment. The shoulder may be in butt-coupling contact with the first, second, third and/or fourth facet of at least one waveguide chip and/or may be configured to butt-couple to a lateral face of the micro-optical device.

The shoulder may be part of the substrate which has a vertical extension larger than the pedestals. When positioning the waveguide chip and/or the micro-optical device, the waveguide chip and/or the micro-optical device may be put on the respective first or second pedestals and may then horizontally be moved until the waveguide chip and/or the micro-optical device is in butt coupling contact with the shoulder.

The at least one shoulder may be formed by a third pedestal having a larger vertical extent then the first and/or second pedestal. The at least one shoulder may be formed as a part of a first and/or second pedestal. A first pedestal provides for a vertical positioning of the waveguide chip and may at the same time provide for a lateral arrangement of a micro-optical device. A second pedestal provides for a vertical positioning of a micro-optical device and may at the same time provide for a lateral arrangement of the waveguide chip.

The shoulder may have at least one lateral extension to allow a shift of the waveguide chip and/or the micro-optical device along the shoulder.

A shoulder may provide for a guidance during lateral translation and/or for a stop.

At least one free surface part may comprise at least one reference mark.

The reference mark may be captured visually and/or optically and may be used for visually or optically supported positioning, in particular for finding an appropriate lateral position of the waveguide chip on the substrate during placement of the waveguide chip.

The reference mark may protrude and may point away from the first cladding or from the second cladding.

A surface part of the substrate and/or at least one of the at least one first pedestal may comprise an opening for receiving the reference mark.

Additionally or alternatively, the reference mark may form an opening for receiving at least one of the at least one first pedestal or a corresponding reference mark arranged on the substrate.

A surface part of the substrate and/or at least one of the at least one second pedestal may comprise an opening for receiving a reference mark, positioned on a micro-optical device.

Additionally or alternatively, a reference mark on a micro-optical device may form an opening for receiving at least one of the at least one second pedestal or a corresponding reference mark arranged on the substrate.

A reference mark pointing away from a surface and able for being received in a corresponding opening provides for a precise positioning in x-y direction and prevents lateral movement after the positioning.

The reference mark may have a specific form, for example a circular, annular or cruciform cross section, which only allows to be received by a suitable opening having an appropriate form.

The substrate and/or the at least one waveguide chip, and in particular a micro-optical device, may comprise an optical marker for x-y alignment. The optical marker may be captured visually and/or optically and may be used for visually or optically supported positioning, in particular for finding an appropriate lateral position of the waveguide chip and/or the micro-optical device during placement on the substrate. The optical markers in the substrate are preferably monolithically integrated and fabricated in the same process as the pillars to achieve the highest position accuracy. The optical markers on the at least one waveguide chip are fabricated of the same material and in the same process as the waveguides to achieve the highest position accuracy.

The placement of the markers on the PIC may be integrated in the fabrication process by the manufacturer. They may be placed on the top and/or bottom side of the PIC and may be made to be visible in the microscope of a pick and place machine.

The substrate may comprise at least one trench for receiving an adhesive.

The trench may be arranged for receiving an adhesive for fixation of the waveguide chip and/or of at least one micro-optical device.

Preferably, there are two trenches with two depths, one for the waveguide chip and one for the micro-optical device. But there may be also only one trench with one depth for both parts. Neither the second cladding nor the interposer must touch the bottom plane of the trench(es) so that waveguide chip and the micro-optical device rest only supported on the pedestals.

In particular, the trench may be arranged between a plurality of first pedestals and/or between a plurality of second pedestals or a first and/or a second pedestal, in particular if formed as a frame, may surround the trench.

The trench may have a vertical extension to allow receiving an appropriate amount of adhesive and/or an electronic component bonded to a micro-optical device, preferably the trench has vertical extension between 20pm and 400pm and/or a lateral extension between 500pm and 50mm.

The assembly may comprise an adhesive for fixation of the waveguide chip and/or of at least one micro-optical device, preferably arranged in a trench.

The assembly may comprise at least one micro-optical device, in particular a photonic integrated circuit (PIC) chip and/or an electrical interposer.

In particular, the at least one micro-optical device may be arranged on at least one second pedestal arranged on the substrate such that the second pedestal contacts the micro-optical device, in particular as described above, and may be in butt-coupling contact with the waveguide chip.

As the first and/or the second pedestals are formed with a high precision, the functional optical contact between the waveguide chip and the micro-optical device is highly reliable.

The assembly may comprise an electrical interposer bonded to a photonic integrated circuit chip being in contact with at least one second pedestal.

The electrical interposer may be arranged in a trench of the substrate.

The electrical interposer may be fixed to the PIC and may be placed inside of the trench but having no contact to the trench itself. The adhesive may be placed between the bottom of the trench and the electrical interposer. It may also flow around the electrical interposer and/or into the space between interposer and PIC. So, the electrical interposer may be embedded in adhesive.

The electrical interposer preferably may be bonded to the PIC before the assembly.

It is possible that no interposer is needed. In that case the PIC is bonded to the substrate with the adhesive in the trench.

The assembly may comprise at least one fiber containing element, such as a fiber block, a fiber-ribbon or a single fiber, wherein the at least one second waveguide at the second facet of the at least one waveguide chip is configured to couple optical signals with the at least one fiber containing element.

The fiber containing element may provide for optically connecting the assembly.

The fiber containing element may be bonded to the waveguide chip and/or to the substrate.

The fiber containing element may be actively aligned using an optical loop back on the at least one waveguide chip.

Alternatively, the fiber containing element may be placed on the substrate by passive alignment, using pedestals and/or shoulders on the substrate, similar as described above for the at least one waveguide chip and the at least one micro-optical device.

The substrate may comprise electrically conductive paths, preferably for contacting the micro-optical device and/or an electrical interposer. In particular, the substrate may comprise a printed circuit board (PCB). The electrically conductive path may comprise materials such as copper and/or nickel and/or gold.

The substrate may comprise silicon and/or glass and/or resin and/or a PCB material, such as FR4.

Pedestals and/or shoulders may be formed from silicon and/or glass and/or resin.

The assembly may further comprise a cooling element, in particular at least one cooling rip or a Peltier element. The substrate may be arranged on the cooling element and/or the cooling element may be arranged on the side of the substate which is opposite to the side which carries the waveguide chip.

The object is also achieved by a method for manufacturing an assembly to integrate at least one micro-optical device, in particular a photonic integrated circuit chip. Preferably the assembly to integrate at least one micro-optical device is an assembly as described above.

The at least one micro-optical device has at least a first face and has at least one first waveguide for optical signals.

The method comprises the following steps.

At least one waveguide chip is provided, which has opposing first and second facets and opposing third and fourth facets is provided. The at least one waveguide chip has at least one second waveguide disposed therein, such that there is connection for transferring optical signals between the first facet and the second facet.

The first facet is configured to butt-couple to the first face of the at least one micro-optical device. The at least one second waveguide at the first facet is configured to butt-couple the optical signals with the at least one first waveguide of the at least one micro-optical device.

The at least one waveguide chip comprises a first cladding and a second cladding and the at least one second waveguide is arranged between the first cladding and the second cladding, wherein the first cladding and the at least one second waveguide have a common flat surface. The second cladding only covers a part of the common flat surface such that the first cladding comprises at least one free surface part beside the second cladding which is free from the second cladding. Alternatively or additionally, the first cladding only covers a part of the second cladding such that the second cladding comprises at least one free surface part beside the first cladding which is free form the first cladding.

Such as waveguide chip may be provided by a method as for example disclosed in EP 2 219 059 B1.

A substrate for receiving the at least micro-optical device and the at least one waveguide chip is provided.

The substrate comprises a substrate base and one or more, preferably monolithically integrated, first pedestals.

The one or more first pedestals are configured to vertically align the butt-coupling between the at least one second waveguide of the at least one waveguide chip with the at least one first waveguide of the at least one micro-optical device.

In particular, the top surfaces of the at least one first pedestal, preferably the top surfaces of all first pedestals being in contact with one waveguide chip, define a first plane parallel to a bottom surface of the substrate base.

In a further step the at least one waveguide chip is placed on the substrate, such that at least one, preferably each, of the least one free surface part contacts a respective first pedestal.

As the free surface parts contact a respective first pedestal further steps for a vertical alignment are not necessary, such as providing bumpers of an appropriate dimension, dosing an appropriate amount of adhesive or bumper material and measuring the vertical position of the waveguide chip or the relative position of the waveguide chip with respect to the substrate or the micro optical device.

The substrate may comprise one or more, preferably monolithically integrated, second pedestals. In particular, the top surfaces of the at least one second pedestal, preferably the top surfaces of all second pedestals for carrying one micro optical device, define a second plane parallel to a bottom surface of the substrate base.

The method may comprise the step of providing the at least first pedestal and preferably at least one second pedestal on the substrate by monolithically integration or by using an additive method, in particular imprinting.

The method may comprise the step of placing at least one micro-optical device on the substrate, in particular such that the micro-optical device contacts at least one second pedestal. Vertical alignment of the micro-optical device is as easy as the vertical alignment of the waveguide chip.

The method may comprise the step of aligning the one waveguide chip and/or the one micro-optical device along the x-y direction.

The waveguide chip and/or the micro-optical device may be laterally moved along one or more shoulders arranged on the substrate.

The waveguide chip and/or the micro-optical device may be laterally moved first along a first direction along a shoulder and/or until a stop occurs at a second shoulder. Subsequently the waveguide chip and/or the micro-optical device may be laterally moved along a second direction along the second shoulder and/or until a stop occurs.

The first and the second direction preferably are perpendicular to each other and may correspond to an x- and an y- direction, being parallel to the bottom plane of the substrate and being perpendicular to the vertical or z-direction.

The waveguide chip and/or the micro-optical device may be positioned along the x-y direction using at least one reference mark arranged on the waveguide (WG) chip and/or using at least one reference mark arranged on the substrate.

The reference mark may be received by a respective opening of the counterpart.

Once the reference mark is received by a respective opening, the waveguide chip and/or the micro-optical device may not be moved anymore and have a fixed position in x and y direction.

The reference mark and the respective opening are designed such that they do not change the vertical position defined by the first and/or second pedestals.

The waveguide chip and/or the micro-optical device may be positioned along the x-y direction using at least one optical marker arranged in the substrate and/or on the waveguide chip and/or on the micro-optical device.

The waveguide chip and/or the micro-optical device may be moved under visual or optical control until the optical marker has reached an intended position relative to the substrate or to another element placed on the substrate.

The at least one waveguide chip and/or the one micro-optical device may be fixed to the substrate, in particular by providing an adhesive and preferably by placing the adhesive in a trench arranged in the substrate.

Placement and lateral movement may be performed by a conventional pick and place tool, preferably by a tool reaching accuracies of less than ±1µm, preferably of less than ±0.5µm.

Further advantageous aspects of the invention are explained in the following by means of exemplary embodiments and the figure. In the drawing, in a schematic manner:
- Figure 1:: shows a schematic illustration of a first example of a waveguide chip according to the invention;
- Figure 2:: shows a schematic illustration of a second example of a waveguide chip according to the invention;
- Figure 3:: shows a schematic illustration of a first example of an assembly according to the invention in a first cross-sectional view;
- Figure 4:: shows a schematic illustration of the first example of an assembly according to the invention in a second cross-sectional view;
- Figure 5:: shows a schematic illustration of the first example of an assembly according to the invention in top view;
- Figure 6:: shows a schematic illustration of details of possible connections between a substrate and a waveguide chip;
- Figure 7:: shows a schematic illustration of details of possible connections between a substrate and a microoptical device;
- Figure 8:: shows a schematic illustration of a second example of an assembly according to the invention in a first side view;
- Figure 9:: shows a schematic illustration of methods steps of a first example of a method according to the invention;
- Figure 10:: shows a schematic illustration of methods steps of a second example of a method according to the invention.

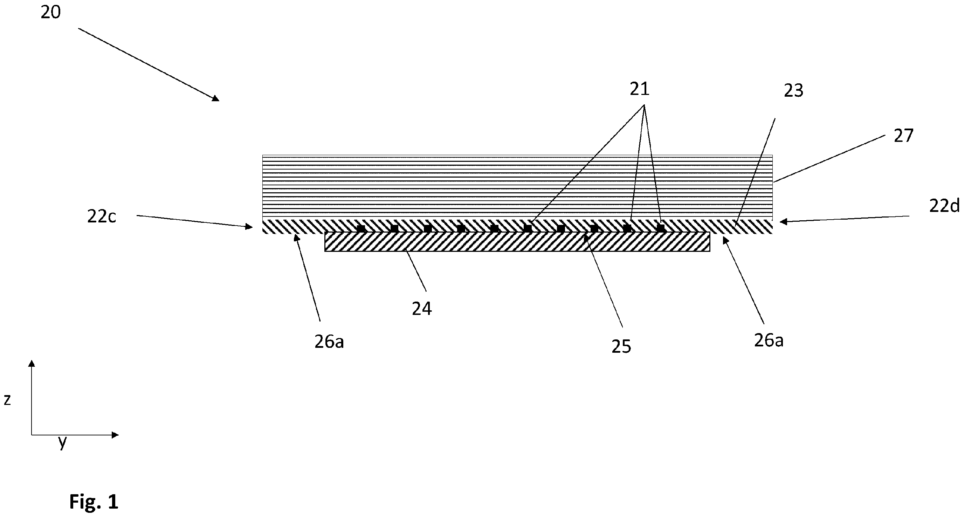

Figure 1 shows a schematic illustration of a first example of a waveguide chip 20 according to the invention in a cross-sectional view in an y-z plane.

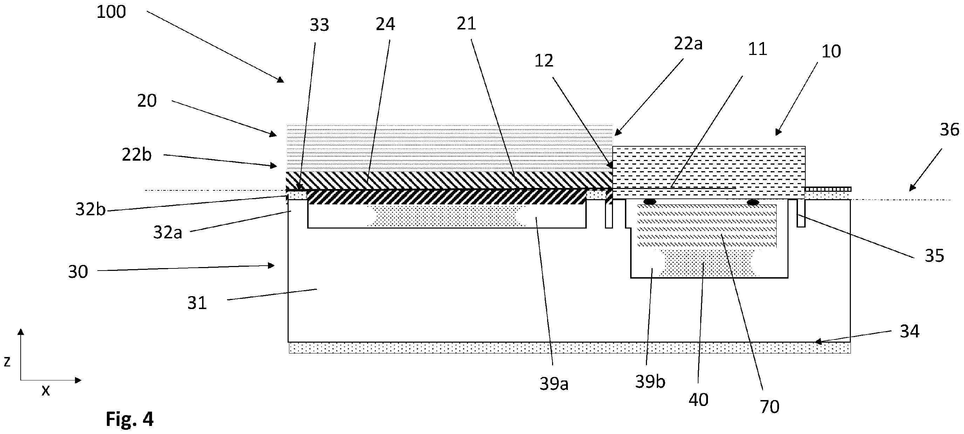

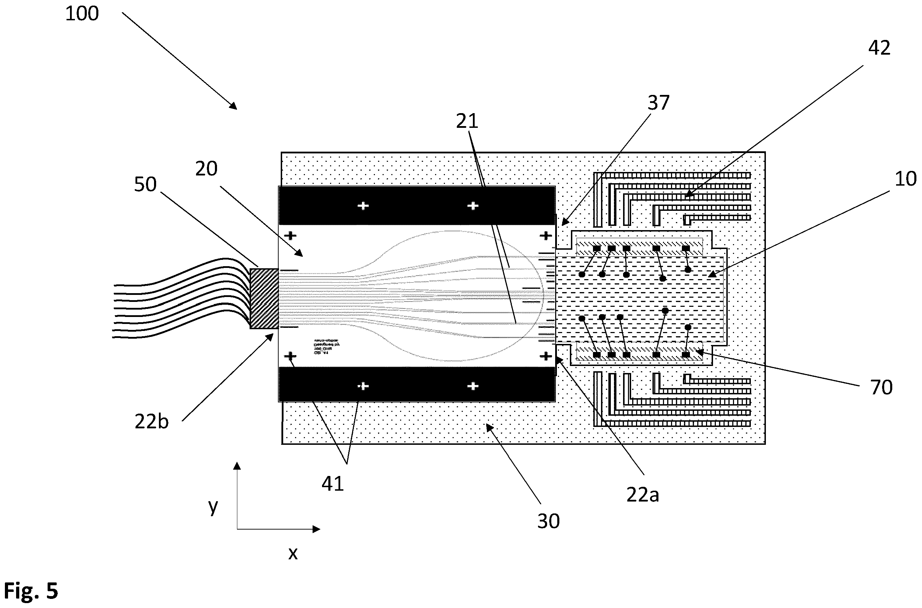

The waveguide chip 20 has opposing first and second facets 22a, 22b (see figures 4, 5) and opposing third and fourth facets 22c, 22d. The waveguide chip 20 has several second waveguides 21 disposed therein between the first and second facets 22a, 22b (see figures 4, 5).

The waveguide chip 20 comprises a first cladding 23 and a second cladding 24. The second waveguides 21 are arranged between the first cladding 23 and the second cladding 24, wherein the first cladding 23 and the second waveguides 21 have a common flat surface 25.

In this example the second cladding 24 only covers a part of the common flat surface 25 such that the first cladding 23 comprises two free surface parts 26a beside the second cladding 24 which are free from the second cladding 23.

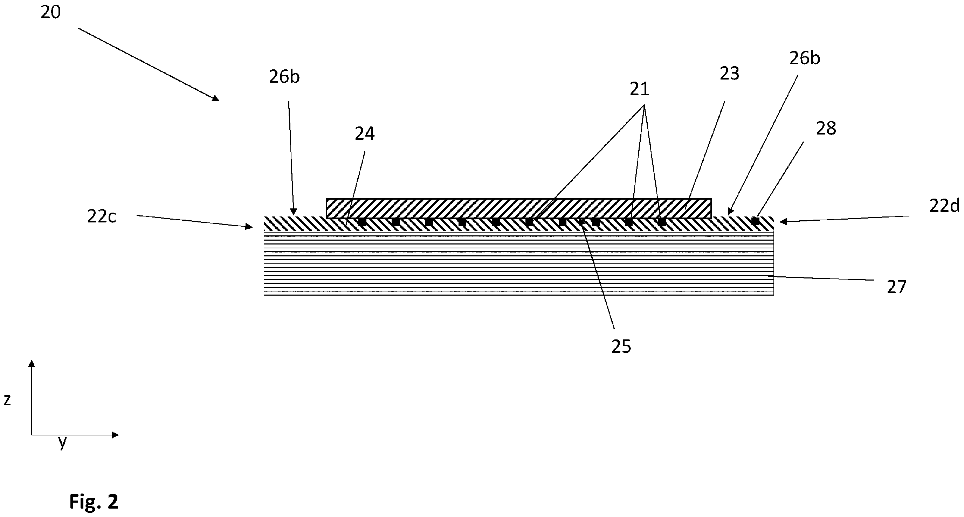

Figure 2 shows a schematic illustration of a second example of a waveguide chip 20 according to the invention in a cross-sectional view in an y-z plane. The second example of a waveguide chip 20 is similar to the fist example shown in figure 1. In the second example the first cladding 23 only covers a part of the second cladding 24 such that the second cladding 24 comprises two free surface parts 26b beside the first cladding 23 which are free from the first cladding 23.

For both the first example as shown in figure 1 and the second example shown in figure 2 the free surface parts 26a, 26b coincide with the common flat surface 25 and therefore define the vertical (in z-direction) position of the second waveguides 21.

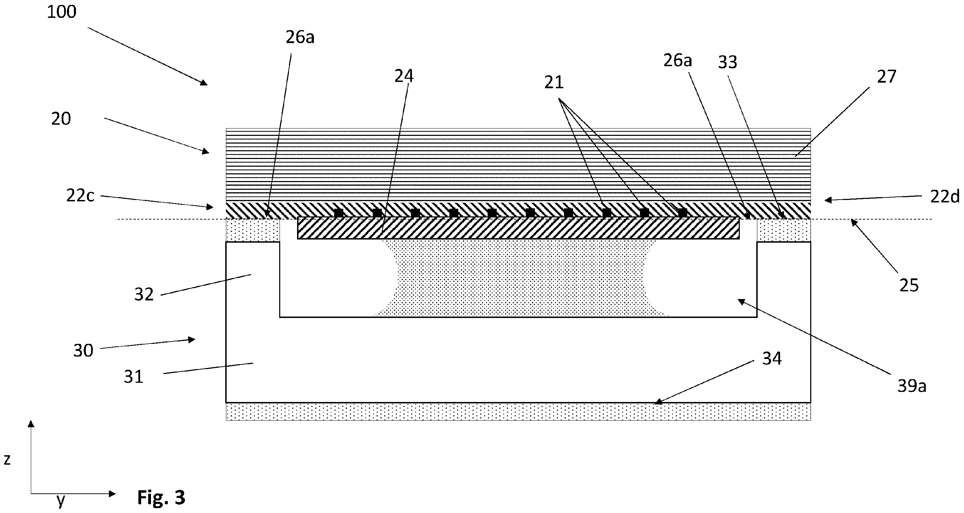

Figure 3 shows a schematic illustration of a first example of an assembly 100 according to the invention in a in a second cross-sectional view in an y-z plane.

The assembly comprises a waveguide chip 20, as show in figure 1, and a substrate 30 for receiving a micro-optical device 10 (see figure 4).

The substrate 30 is in contact with the waveguide chip 20.

The substrate 30 comprises a substrate base 31 and four monolithically integrated first pedestals 32 being vertically arranged between the substrate base 31 and the waveguide chip 20.

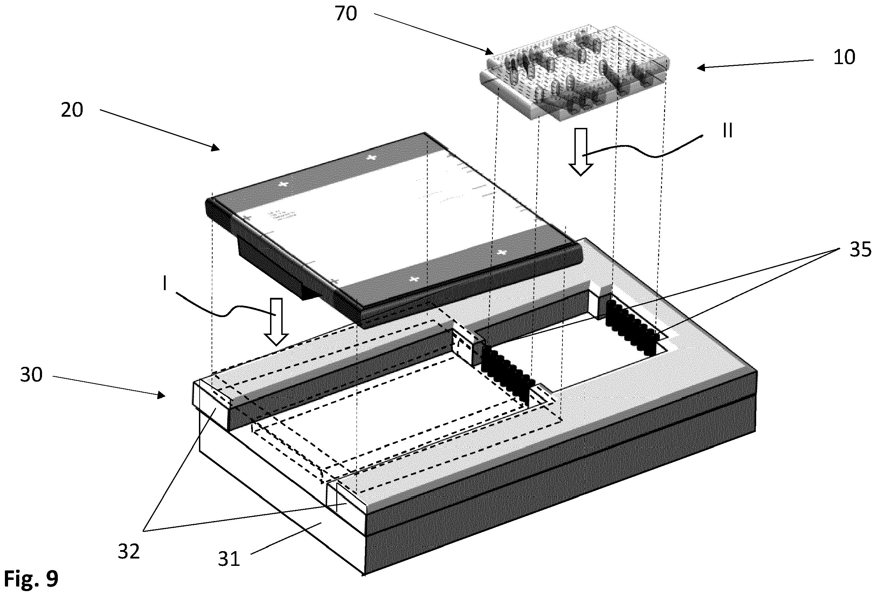

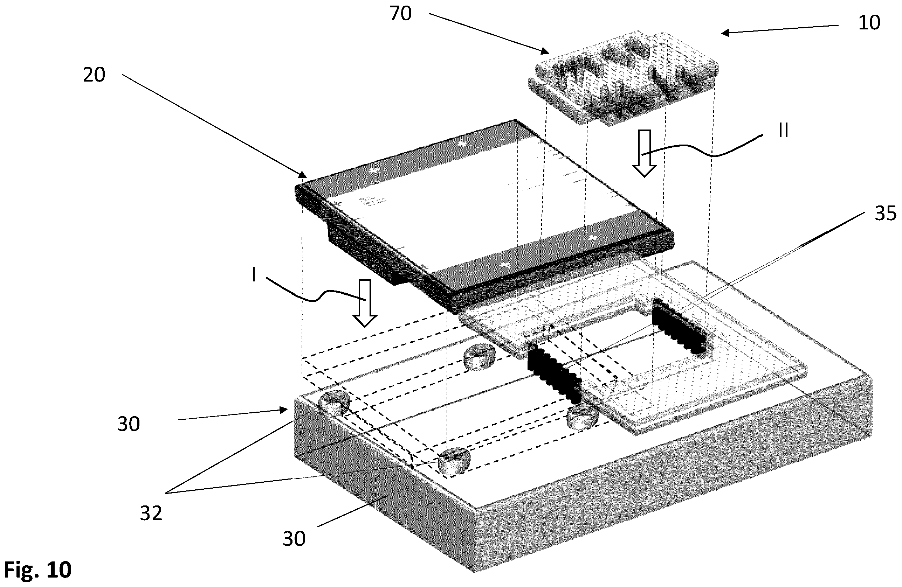

Generally, there can be any number of pedestals 32, 35. In particular, the first pedestals 32 may be formed as a horizontally connected frame as shown in figure 9 or as a plurality of separate pillars as shown in figure 10.

Each, of the free surface parts 26a of the first cladding 23 contacts a respective first pedestal 32.

The top surfaces 33 of the first pedestal 32 define a first plane parallel to a bottom surface 34 of the substrate base 31, where the first plane coincides with the common flat surface 25.

Thus, the design of the waveguide chip 20 having second waveguides 21 with free surface parts 26a forming a common flat surface 25 and the design of the substrate having first pedestals 32 with a flat upper surface 33 being in contact with the free surface parts 26a define the vertical position of the second waveguides 21.

The assembly comprises a trench 39a for receiving an adhesive 40 for fixing the waveguide chip 20.

The trench 39a is arranged between the first pedestals 32.

Figure 4 shows a schematic illustration of the first example of an assembly 100 according to the invention in a second cross-sectional view in an x-z plane.

The assembly further comprises a micro-optical device 10 having a first face 12 and a first waveguides 11 for optical signals.

The first facet 22a of the waveguide chip 20 is configured to butt-couple to the first face 12 of the micro-optical device 10.

The substrate 30 comprises second pedestals 35 for receiving and contacting a micro-optical device 10. The top surfaces of the second pedestals 35 define a second plane 36 parallel to a bottom surface 34 of the substrate base 31.

The micro-optical device 10 contacts the second pedestals 35.

The first pedestals 32 and the second pedestals 35 are configured to vertically align the butt-coupling between the at least one second waveguide 21 of the at least one waveguide chip with the at least one first waveguide 11 of the micro-optical device 10.

The second plane 36 is arranged such that the first waveguides 11 at the first face 12 have a vertical position which coincides with the vertical position of the at least one second waveguide 21 of the at least one waveguide chip at the face 22a. The vertical position of the at least one second waveguides 21 is defined by a first plane defined by the top surfaces 33 of the first pedestals 32.

The micro-optical device 10 is a photonic integrated circuit (PIC) chip, which is bonded to an interposer 70.

The substrate 30 comprises a second trench 39b which receives the interposer 70 and adhesive 40 for fixing the interposer 70 together with the micro-optical device 10 to the substrate 30.

The adhesive 40 fixes the package of the interposer 70 and the PIC 10 to the substrate 30. It may also flow between the PIC 10 and the interposer 70 but those are already bonded (fixed) together.

When manufacturing the assembly, first a substrate 30 may be formed. Trenches 39a, 39b and second pedestals 35 may be formed from a flat blank by a subtracting method such as etching.

Also, base parts 32a of first pedestals 32 may be formed by a subtracting method, top parts 32b protruding from the original surface of the blank may be subsequently formed by an additive method such as imprinting, 3D printing or other deposition method such as PVD (physical vapor deposition) or CVD (chemical vapor deposition).

Alternatively, initially, a top most layer of a few microns thickness of silicon dioxide may be thermally grown on a silicon substrate 30 to form a flat blank or it may be applied for example by a PVD or a CVD process. The layer thickness is very well controlled in all of these methods which is why they are suited for very precise thin layers.

Alternatively, this layer may be etched completely away when forming the first pedestals 32 but not for the second pedestals 35. The thickness of the spacer layer 32b is very well controlled/controllable. The thickness of the layer may for example be adapted to the vertical position of the first waveguide 11 within the micro-optical device 10 and/or to the vertical position of the second waveguide 21 within the waveguide chip 20.

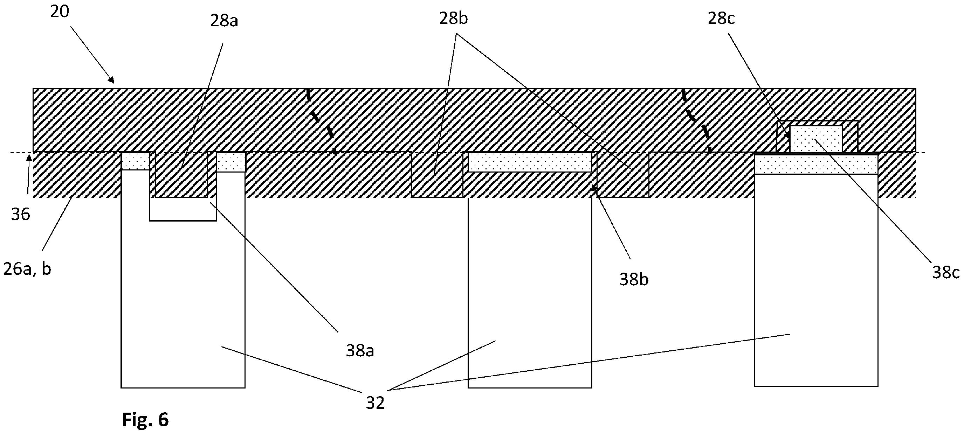

Additionally, reference marks 38c (see figure 6) may be integrated in the one waveguide chip 20 or added by the additive method.

The reference marks 38c can be made of cladding material or even core material. In that case they are fabricated in the same process as the other structures. Or they can be added by additive manufacturing.

Figure 5 shows a schematic illustration of the first example of an assembly according to the invention in top view.

The second waveguides 21 (see also figures 1 and 3) at the first facet 22a are configured to butt-couple the optical signals with the first waveguide 11 (see figure 4) of the micro-optical device 10.

The assembly 100 comprises at least one fiber containing element 50, in this example a fiber block, is bonded to the waveguide chip 20.

Alternatively, the fiber containing element 50 may be fixed to the substrate to make the bond mechanically more durable.

The second waveguides 21 at the second facet 22b of the waveguide chip 20 are configured to couple optical signals with the fiber containing element 50.

The substrate 30 comprises electrically conductive paths 42 for contacting the micro-optical device 10 and/or the interposer 70.

The substrate 30 and the waveguide chip 20 comprise optical markers 41 for x-y alignment under visual control.

In this example, the optical markers 41 do not need to function as mechanical stoppers but may be flat as they are used under visual control.

However, the waveguide chip 20 may alternatively or additionally comprise reference marks 28a, 28b and/or 28c as shown in figure 6.

Figure 6 shows a schematic illustration of details of examples of possible connections between first pedestals 32 of substrate 30 and a waveguide chip 20.

The free surface part 26a, 26b may comprise a reference mark 28a and a surface of the substrate 30, in this case of a first pedestal 32, may comprises an opening 38a for receiving the reference mark 28a.

A reference mark 28b on the free surface part 26a, 26b of the waveguide chip 20 may form an opening 38b for receiving a first pedestal 32.

Alternatively, an opening 28c may be formed in the free surface part 26a, 26b of the waveguide chip 20 for receiving a reference mark 38c, arranged in a first pedestal 32.

In each example the top surface of the first pedestal 32 contacts the free surface part 26a, 26b.

Reference marks 28a, 28b, 28c and respective openings 38a, 38b, 38c are designed for x-y alignment under mechanical control.

The z-alignment is solely defined by the vertical position of the second plane 36.

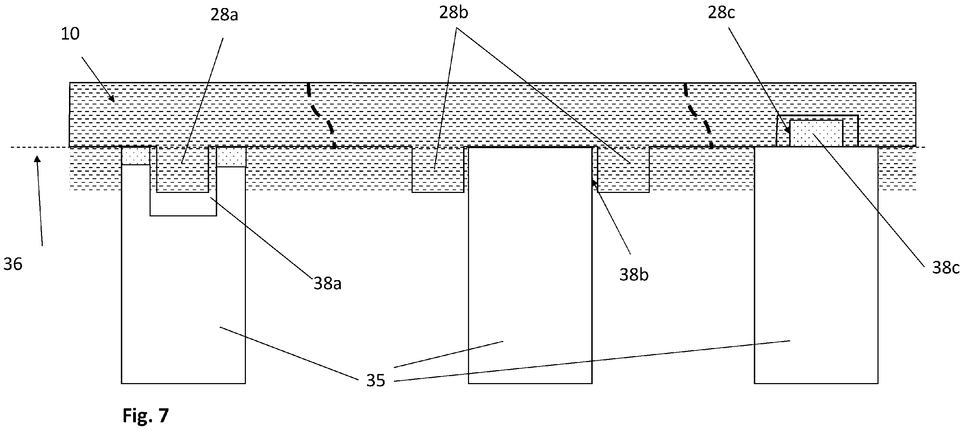

Figure 7 shows a schematic illustration of details of examples of possible connections between a substrate 30 and a micro-optical device 10.

The micro-optical device 10 may comprise a reference mark 28a, a second pedestal 35 of the substrate 30 may comprises an opening 38a for receiving the reference mark 28a.

A reference mark 28b on the micro-optical device 10 may form an opening 38b for receiving a second pedestal 35.

Alternatively, an opening 28c may be formed in the micro-optical device 10 for receiving a reference mark 38c, arranged in a second pedestal 35.

In each example the top surface of the second pedestal 35 contacts the micro-optical device 10.

Thus, the pedestals define the vertical position whereas the reference marks define a lateral position.

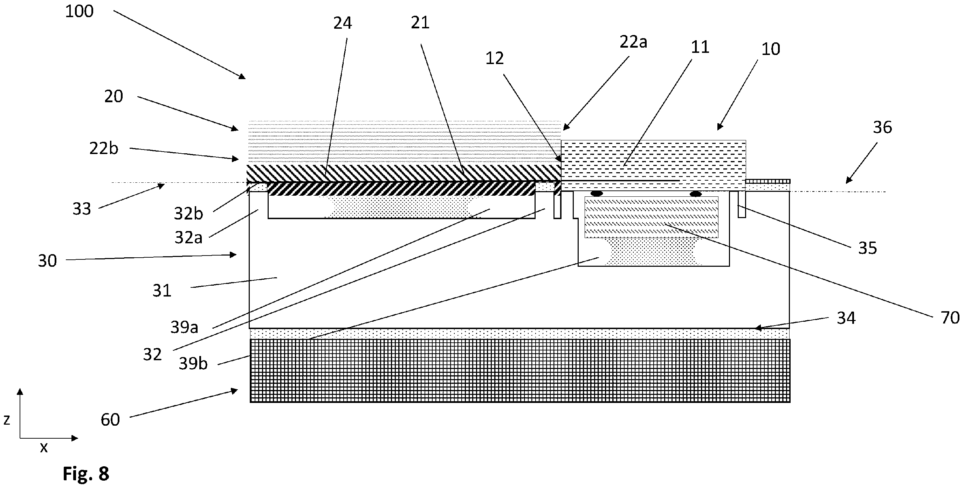

Figure 8 shows a schematic illustration of a second example of an assembly 100 according to the invention in a first side view. The second example is similar to the first example shown in figure 4, but the substrate 31 is placed on a cooling element 60.

Figure 9 shows a schematic illustration of methods steps of a first example of a method according to the invention for manufacturing an assembly 100 as shown in figure 4.

A substrate 30 is provided and a waveguide chip 20 is provided, which is placed on the substrate in a first step I. In a further step II a micro-optical device 10 is placed on the substrate.

In this example the waveguide chip 20 is deposited on first pedestals 32 which are formed as a frame on a substrate base 31.

The micro-optical device 10 is deposited on second pedestals 35 formed as cylindrical columns.

Figure 10 shows a schematic illustration of methods steps of a second example of a method according to the invention, similar to figure 9.

In the second example a substrate 30 is provided having four first pedestals 32 which are formed as pillars and which are arranged on a substrate base 31.

## Claims

1. An assembly (100) for integrating at least one micro-optical device (10), in particular a photonic integrated circuit (PIC) chip, the at least one micro-optical device (10) having at least a first face (12) and having at least one first waveguide (11) for optical signals, the assembly (100)
comprising
- at least one waveguide chip (20) having opposing first and second facets (22a, 22b) and opposing third and fourth facets (22c, 22d), the at least one waveguide chip (20) having at least one second waveguide (21) disposed therein between the first and second facets (22a, 22b), the first facet (22a) being configured to butt-couple to the first face (12) of the at least one micro-optical device (10), the at least one second waveguide (21) at the first facet (22a) being configured to butt-couple the optical signals with the at least one first waveguide (11) of the at least one micro-optical device (10),
the at least one waveguide chip (20) comprising a first cladding (23) and a second cladding (24) and the at least one second waveguide (21) being arranged between the first cladding (23) and the second cladding (24), wherein the first cladding (23) and the at least one second waveguide (21) have a common flat surface (25),
wherein
the second cladding (24) only covers a part of the common flat surface (25) such that the first cladding (23) comprises at least one free surface part (26a) beside the second cladding (24) which is free from the second cladding (23),
and/or
the first cladding (23) only covers a part of the second cladding (24) such that the second cladding (24) comprises at least one free surface part (26b) beside the first cladding (23) which is free from the first cladding (23),
- a substrate (30) for receiving the at least one micro-optical device (10) and being in contact with the at least one waveguide chip (20), the substrate (30) comprising a substrate base (31) and at least one, preferably monolithically integrated, first pedestal (32) being vertically arranged between the substrate base (31) and the at least one waveguide chip, in particular the top surfaces (33) of the respective first pedestal defining a first plane parallel to a bottom surface (34) of the substrate base 31),
the at least one first pedestal (32) being configured to vertically align the butt-coupling between the at least one second waveguide (21) of the at least one waveguide chip with the at least one first waveguide (11) of the at least one micro-optical device (10),
- wherein at least one, preferably each, of the at least one free surface part (26a) of the first cladding (23) or at least one, preferably each, of the at least one free surface part (26b) of the second cladding (24) contacts a respective first pedestal (32).

2. The assembly (100) according to claim 1, wherein the substrate (30) comprises at least one second pedestal (35) for receiving at least one micro-optical device (10), the at least one second pedestal (35) being configured for contacting at least one micro-optical device (10), in particular the top surfaces of the at least one second pedestal (35) defining a second plane (36) parallel to a bottom surface (34) of the substrate base (31).

3. The assembly (100) according to claim 1, wherein the substrate (30) comprises at least one shoulder (37) for x-y alignment, in butt-coupling contact with the first, second, third and/or fourth facet of at least one waveguide chip (20) and/or configured to butt-couple to a lateral face of the micro-optical device (10).

4. The assembly (100) according to claim 1, wherein at least one free surface part (26a, 26b) comprises at least one reference mark (28), and
in particular
a surface of the substrate (30) and/or at least one of the at least one first pedestal (32) and/or at least one second pedestal (35) comprises an opening (38a) for receiving a reference mark (28a),
and/or
a reference mark (28b) on the waveguide chip (20) and/or on the micro-optical device (10) forms an opening (28b) for receiving at least one of the at least one first pedestal (32) or a second pedestal (35) or a corresponding reference mark (38c) arranged on the substrate (30).

5. The assembly (100) according to claim 1, wherein the substrate (30) and/or the at least one waveguide chip (20), and in particular a micro-optical device (10), comprises an optical marker (41) for x-y alignment.

6. The assembly (100) according to claim 1, wherein the substrate comprises at least one trench (39a; 39b) for receiving an adhesive (40) for fixation of at least one micro-optical device (10) and/or the at least one waveguide chip (20) and/or an interposer (70),
in particular
the trench (39a; 39b) being arranged between a plurality of first pedestals (32) and/or between a plurality of second pedestals (35)
and/or
a first (32) and/or a second pedestal (35) surrounding a trench (39a; 39b).

7. The assembly (100) according to claim 1, wherein the assembly (100) comprises at least one micro-optical device (10), in particular a photonic integrated circuit (PIC) chip and/or an electrical interposer (70), in particular arranged on at least one second pedestal (35) arranged on the substrate (30).

8. The assembly (100) according to claim 6, wherein the assembly (100) comprises an electrical interposer (70) bonded to a photonic integrated circuit chip (10) being in contact with at least one second pedestal (35), more preferably the electrical interposer (70) is arranged in a trench (39a; 39b) of the substrate (30).

9. The assembly (100) according to claim 1, wherein the assembly (100) comprises at least one fiber containing element (50), such as a fiber block or fiber-ribbon or single fiber,
wherein the at least one second waveguide (21) at the second facet (22b) of the at least one waveguide chip (20) is configured to couple optical signals with the at least one fiber containing element (50), wherein in particular the fiber containing element (50) is bonded to the waveguide chip (20) and/or to the substrate (30).

10. The assembly (100) according to claim 1, wherein
the substrate (30) comprises electrically conductive paths (42), preferably for contacting the micro-optical device (10) and/or electrical interposer (70), and in particular a printed circuit board.

11. Method for manufacturing an assembly (100) to integrate at least one micro-optical device (10), in particular a photonic integrated circuit (PIC) chip, the at least one micro-optical device (10) having at least a first face (12) and having at least one first waveguide (11) for optical signals, preferably according to at least one of the preceding claims,
comprising the steps of
- providing at least one waveguide chip (20) having opposing first and second facets (22a, 22b) and opposing third and fourth facets (22c, 22d), the at least one waveguide chip (20) having at least one second waveguide (21) disposed therein and/or positioned between the first and second facets (22a, 22b),
the first facet (22a) being configured to butt-couple to the first face (12) of the at least one micro-optical device (10) , the at least one second waveguide (21) at the first facet being configured to butt-couple the optical signals with the at least one first waveguide (11) of the at least one micro-optical device (10) , wherein the at least one waveguide chip (20) comprises a first cladding (23) and a second cladding (24) and the at least one second waveguide (21) is arranged between the first cladding (23) and the second cladding (24), wherein the first cladding (23) and the at least one second waveguide (21) have a common flat surface (25) and
wherein
the second cladding (24) only covers a part of the common flat surface (25) such that the first cladding (23) comprises at least one free surface part (26a) beside the second cladding (24) which is free from the second cladding (24),
and/or first cladding (23) only covers a part of the second cladding (24) such that the second cladding (24) comprises at least one free surface part (26b) beside the first cladding (23) which is free form the first cladding (23),
- providing a substrate for receiving the at least one micro-optical device (10) and the at least one waveguide chip (20); the substrate (30) comprising a substrate base (31) and one or more, preferably monolithically integrated, first pedestals, the one or more first pedestals being configured to vertically align the butt-coupling between the at least one second waveguide (21) of the at least one waveguide chip (20) with the at least one first waveguide (11) of the at least one micro-optical device (10), in particular the top surfaces of the at least one first pedestal defining a first plane parallel to a bottom surface (34) of the substrate base (31),
- the substrate (30) preferably comprising one or more, preferably monolithically integrated, second pedestals (35), in particular the top surfaces of the at least one second pedestal (35) defining a second plane parallel to a bottom surface (34) of the substrate base (31),
- placing the at least one waveguide chip (20) on the substrate (30), such that at least one, preferably each, of the least one free surface part contacts a respective first pedestal.

12. Method according to claim 11 comprising providing the at least first pedestal and preferably at least one second pedestal (35) on the substrate (30) by monolithically integration and/or by using an additive method, in particular imprinting.

13. Method according to claim 11 or 12 comprising the step of placing at least one micro-optical device (10) on the substrate (30), in particular such that the micro-optical device (10) contacts at least one second pedestal (35).

14. Method according to claim 11, 12 or 13 comprising the step of aligning the one waveguide chip (20) and/or the one micro-optical device (10) along the x-y direction, preferably
- along one or more shoulders arranged on the substrate (30)
and/or
- using at least one reference mark (28a, 28b, 28c) arranged on the waveguide chip (20)
and/or
- using at least one reference mark arranged on the substrate (30)
and/or
- using at least one optical marker (41) arranged in the substrate (30) and/or on the waveguide chip (20) and/or on the micro-optical device (10).

15. Method according to claim 11, 12 or 13 comprising the step of fixing the one waveguide chip (20) and/or the one micro-optical device (10) to the substrate (30), in particular by providing an adhesive (40) and preferably placing the adhesive (40) in a trench (39a; 39b) arranged in the substrate (30).
